# EUROPÄISCHE PATENTSCHRIFT

(11) **EP 3 095 914 B1**
(45) Veröffentlichungstag und Bekanntmachung des Hinweises auf die Patenterteilung: **27.01.2021**
(21) Anmeldenummer: 15168522.9
(22) Anmeldetag: 20.05.2015
(51) Int. Cl.: E01C 7/18, E01C 7/32

(54) **VERFAHREN ZUR HERSTELLUNG EINES FAHRBAHNAUFBAUS**
METHOD FOR MANUFACTURING A ROAD STRUCTURE
PROCÉDÉ DE PRODUCTION D'UNE STRUCTURE ROUTIÈRE

(43) Veröffentlichungstag der Anmeldung: 23.11.2016
(73) Patentinhaber: Sika Technology AG, 6340 Baar (CH)
(72) Erfinder: Ackermann, Herbert, 8632 Tann (CH)
(74) Vertreter: Sika Patent Attorneys

(56) Entgegenhaltungen:
- EP-A1- 2 281 948
- EP-A2- 0 199 371

## Beschreibung

### Technisches Gebiet

Die Erfindung betrifft ein Verfahren zur Herstellung eines Fahrbahnaufbaus gemäß dem Oberbegriff des Anspruchs 1.

### Stand der Technik

Als oberste Schicht wird im Strassenbau üblicherweise eine Tragschicht auf Bitumenbasis aufgebracht.

Es stellt sich jedoch das Problem, dass ein guter Haftverbund zwischen der Tragschicht und dem Untergrund vorhanden sein muss, was natürlich die Haftungen aller Zwischenschichten mit umfasst. Die Haftung zwischen Untergrund und Tragschicht auf Bitumenbasis stellt ein aufgrund der beteiligten Materialien sehr schwierig zu lösendes Problem dar.

Bei der Asphaltierung werden heute z.B. Bitumenemulsionen als Haftbrücke eingesetzt. Es werden dabei typischerweise etwa 0,3 kg/m² Bitumenemulsion eingesetzt. Der Einsatz dieser Haftbrücke ist zeit- und arbeitsintensiv und kann nicht bei jeder Witterung erfolgen. Außerdem ist eine relative lange Wartezeit zwischen Applikation der Haftbrücke und dem Asphalt notwendig. Die EP 2 281 948 A1 offenbart ein Verfahren zur Herstellung eines Fahrbahnaufbaus, wobei eine Haftzusammensetzung in Form eines Granulats auf eine zumindest noch leicht klebrige Kunststofffolie aufgebracht wird, bevor eine Tragschicht auf Bitumenbasis aufgebracht wird.

Die zeitaufwendigen Verfahren zur Bildung einer Haftbrücke nach dem Stand der Technik sind relativ teuer und insbesondere dann problematisch, wenn Arbeiten unter Zeitdruck ausgeführt werden müssen, z.B. bei der Sanierung von Asphaltbelägen, wie bei dem Re-Surfacing von Strassen oder Brücken.

### Darstellung der Erfindung

Die Aufgabe der vorliegenden Erfindung ist es, die Nachteile nach dem Stand der Technik zu überwinden. Insbesondere soll ein Verfahren zur Herstellung eines Fahrbahnaufbaus bereitgestellt werden, welches schnell durchgeführt werden kann und zu einem guten Haftverbund zwischen dem Untergrund und einer Tragschicht auf Bitumenbasis führt. Zusätzliche Oberflächenbehandlungen, wie z.B. Aufbringen einer Bitumenemulsion, und Wartezeiten zwischen der Applikation der einzelnen Schichten sollen vermieden werden. Zudem soll das Verfahren einfach, rationell und preisgünstig sein.

Überraschenderweise konnte das Problem gelöst werden, indem Pellets aus einer speziellen Haftzusammensetzung mit einem bestimmten Durchmesser in einer bestimmten Auftragsmenge direkt vor der Asphaltapplikation auf eine nicht-klebrige Oberfläche eines Untergrunds eingestreut werden. Bei der Applikation des Asphalts werden die Pellets durch die Asphalttemperatur teilweise oder ganz geschmolzen und bilden dabei zum Asphalt wie auch zum Untergrund eine ausgezeichnete Haftung.

Dementsprechend betrifft die Erfindung ein Verfahren zur Herstellung eines Fahrbahnaufbaus gemäss Anspruch 1.

Das erfindungsgemäße Verfahren ermöglicht gegenüber dem Stand der Technik eine einfachere Applikation der Haftbrücke für Asphaltbeschichtungen. Die Pellets können wetterunabhängig in einem Arbeitsschritt von Hand oder maschinell eingestreut werden. So werden die Kosten für die Applikation des Haftvermittlers zum Asphalt reduziert und es ist keine Wartezeit zwischen den einzelnen Arbeitsgängen erforderlich. Es ist also eine Beschichtung mit Asphalt in einem viel kürzeren Zeitintervall möglich, was wiederum einen Kostenvorteil mit sich bringt. Bei der maschinellen Einstreuung ist ausserdem eine sehr genaue Mengendosierung möglich.

Dies ist vor allem von Interesse für die Sanierung von Asphaltbelägen, z. B. von Strassen oder Brücken, welche unter Zeitdruck durchgeführt werden muss. Das erfindungsgemäße Verfahren eignet sich daher insbesondere für alle Anwendungen, bei denen in kurzer Zeit, z.B. über Nacht auf Autobahnen, Asphaltschichten ersetzt werden müssen und eine Haftbrücke zum Untergrund eingesetzt wird.

Ein weiterer Vorteil besteht darin, dass sich Arbeiter auf der nicht klebrigen Oberfläche bewegen können und auch Vorrichtungen auf die nicht klebrige Oberfläche gestellt werden können, was das Verfahren weiter vereinfacht.

### Wege zur Ausführung der Erfindung

Als "Raumtemperatur" wird in diesem Dokument eine Temperatur von 23 °C verstanden.

Die vorliegende Erfindung betrifft ein Verfahren zur Herstellung eines Fahrbahnaufbaus umfassend die Schritte
(i) Aufbringen von Pellets aus einer Haftzusammensetzung auf eine nicht klebrige Oberfläche eines Untergrunds umfassend eine Tragstruktur, vorzugsweise eine Betonstruktur, wobei die Haftzusammensetzung mindestens ein Epoxid-Festharz und mindestens ein bei Raumtemperatur festes thermoplastisches Polymer enthält; und
(ii) Aufbringen einer Tragschicht auf Bitumenbasis, wobei die nicht klebrige Oberfläche des Untergrunds aus Beton, Asphalt, oder einer Bitumenmembran gebildet ist, wobei die Pellets einen Durchmesser in einem Bereich von 1 bis 3 mm aufweisen und wobei die Auftragsmenge der Pellets im Bereich von 50 bis 300 g/m² liegt.

Der Untergrund umfasst eine Tragstruktur. Der Untergrund kann z.B. aus der Tragstruktur bestehen oder eine oder mehrere weitere Schichten über der Tragstruktur umfassen.

Die Tragstruktur ist vorzugsweise ein Gebilde des Hoch- oder Tiefbaus. Insbesondere kann dies eine Brücke, eine Galerie, ein Tunnel, eine Auffahr- oder Abfahrrampe oder ein Parkdeck sein. Als bevorzugtes Beispiel einer derartigen Tragstruktur gilt eine Brücke. Diese für die Fahrbahn notwenige Tragstruktur ist eine Struktur aus einem Material, welche eine tragende Funktion aufweisen kann. Insbesondere ist dieses Material ein Metall oder eine Metalllegierung oder ein Beton, insbesondere ein armierter Beton, bevorzugt ein Stahlbeton. Die Tragstruktur ist bevorzugt eine Betonstruktur. Als meist bevorzugtes Beispiel einer derartigen Tragstruktur gilt eine Brücke aus Beton.

Der Untergrund kann ferner auf der Tragstruktur Schichten aufweisen, die bei einem Fahrbahnaufbau üblich sind, wie z.B. eine oder mehrere Bitumenmembranen und/oder Asphaltschichten.

Bei der Asphaltschicht bzw. dem Asphaltbelag handelt es sich insbesondere um Tragschichten auf Bitumenbasis wie sie später erläutert werden. Sofern der Untergrund eine solche Asphaltschicht als oberste Schicht aufweist, handelt es sich in der Regel um einen gebrauchten bzw. beschädigten Asphaltbelag, der zu sanieren ist.

Die Oberfläche des Untergrunds, auf die die Pellets der Haftzusammensetzung aufgebracht werden, ist eine nicht klebrige Oberfläche. Es handelt sich bevorzugt um eine feste oder harte Oberfläche. Die Oberfläche ist vorzugsweise trocken, sie kann aber gegebenenfalls auch mit Wasser benässt sein, z.B. durch Regen. Im Gegensatz dazu werden nach dem Stand der Technik Haftzusammensetzungen häufig in klebrige Oberflächenschichten appliziert, um eine Adhäsion mit dem Untergrund zu gewährleisten.

Klebrige Oberflächen entstehen insbesondere dann, wenn eine Schichtzusammensetzung appliziert wird und die applizierte Schicht noch nicht gehärtet ist.

Die nicht klebrige Oberfläche des Untergrunds ist erfindungsgemäß aus Beton, z. B. der Betontragstruktur, Asphalt, oder einer Bitumenmembran gebildet. Die nicht klebrige Oberfläche des Untergrunds ist besonders bevorzugt aus Beton oder Asphalt.

Es ist bevorzugt, dass die Oberflächenschicht des Untergrunds keine Primerschicht ist. Es ist ein Vorteil des Verfahrens, dass keine Primerschicht bzw. Bitumenemulsion zur Anbindung der Haftzusammensetzung nötig ist.

Erfindungsgemäß werden auf die nicht klebrige Oberfläche des Untergrunds Pellets aus einer Haftzusammensetzung aufgebracht. Die Haftzusammensetzung enthält mindestens ein Epoxid-Festharz und mindestens ein bei Raumtemperatur festes thermoplastisches Polymer.

Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (I) 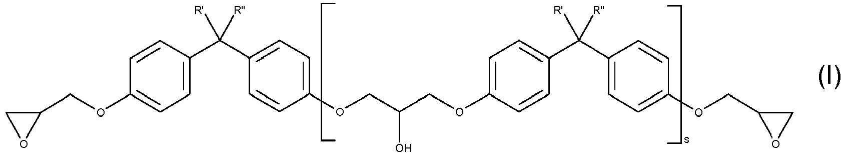 auf.

Hierbei stehen die Substituenten R' und R" unabhängig voneinander entweder für H oder CH₃. Weiterhin steht der Index s für einen Wert von > 1,5, insbesondere von 2 bis 12.

Derartige Epoxid-Festharze sind kommerziell erhältlich, z.B. unter den Handelsreihennamen D.E.R.™ bzw. Araldite® bzw. Epikote von Dow bzw. Huntsman bzw. Hexion und dementsprechend dem Fachmann bestens bekannt.

Verbindungen der Formel (I) mit einem Index s zwischen 1 und 1,5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1,5 aufweist.

Das bei Raumtemperatur feste thermoplastische Polymer ist insbesondere ein bei Raumtemperatur festes Polymer, welches bei einer Temperatur oberhalb der Erweichungstemperatur erweicht und schliesslich fliessfähig wird.

In diesem Dokument werden Erweichungstemperaturen oder Erweichungspunkte (Softening point) insbesondere als nach der Ring & Kugel-Methode gemäss DIN ISO 4625 gemessen verstanden.

Es ist sehr vorteilhaft, wenn das bei Raumtemperatur feste thermoplastische Polymer einen Erweichungspunkt im Bereich von 50 °C bis 150 °C, insbesondere von 90 °C bis 130 °C, aufweist. Besonders bevorzugt sind thermoplastische Polymere, welche einen Erweichungspunkt aufweisen, welcher mindestens 25 °C unterhalb der im Schritt (ii) beim Auftragen gemessenen Temperatur der Tragschicht auf Bitumenbasis liegt.

Als bei Raumtemperatur feste thermoplastische Polymere sind insbesondere Homopolymere oder Copolymere von mindestens einem olefinisch ungesättigten Monomeren, insbesondere von Monomeren, welche ausgewählt sind aus der Gruppe bestehend aus Ethylen, Propylen, Butylen, Butadien, Isopren, Acrylonitril, Vinylester, insbesondere Vinylacetat, Vinylether, Allylether, (Meth)acrylsäure, (Meth)acrylsäureester, Maleinsäure, Maleinsäureanhydrid, Maleinsäureester, Fumarsäure, Fumarsäureester und Styrol, geeignet.

Das Copolymer kann aus zwei, drei oder mehr unterschiedlichen Monomeren gebildet sein. Besonders geeignet sind Copolymere, welche lediglich aus den Monomeren der soeben aufgeführten Gruppe hergestellt werden.

Weiterhin besonders geeignet sind durch Pfropfungsreaktion modifizierte Copolymere von olefinisch ungesättigten Monomeren, insbesondere die durch Pfropfungsreaktion modifizierten Copolymere des vorgehenden Abschnitts.

Beispiele für das bei Raumtemperatur feste thermoplastische Polymer sind Polyolefine, insbesondere Poly-α-olefine. Meist bevorzugt sind ataktische Poly-α-olefine (APAO).

Bevorzugte feste thermoplastische Polymere sind Ethylen/VinylacetatCopolymere (EVA), insbesondere solche mit einem Vinylacetat-Anteil von unter 50 Gew.-%, insbesondere mit einem Vinylacetat-Anteil zwischen 10 und 40 Gew.-%, bevorzugt zwischen 20 und 35 Gew.-%, meist bevorzugt zwischen 27 und 32 Gew.-%.

Besonders bevorzugt ist ferner, dass es sich bei dem mindestens einen bei Raumtemperatur festen thermoplastischen Polymer um ein Terpolymer aus Ethylen, Acrylester, z.B. Ethylacrylat, und Maleinsäureanhydrid handelt.

Es hat sich als besonders bevorzugt erwiesen, wenn mindestens zwei verschiedene bei Raumtemperatur feste thermoplastische Polymere verwendet werden, welche bevorzugt eine unterschiedliche chemische Zusammensetzung aufweisen. Meist bevorzugt ist eines dieser zwei verschiedenen thermoplastischen Polymere ein Ethylen/Vinylacetat-Copolymer.

Weiterhin ist es vorteilhaft, wenn das weitere thermoplastische Polymer ein Copolymer ist, bei dessen Herstellung Maleinsäure oder Maleinsäureanhydrid als Monomer oder als Pfropfungsreagenz eingesetzt wurde.

Vorzugsweise liegt das Gewichts-Verhältnis von Epoxid-Festharz zu bei Raumtemperatur festem thermoplastischem Polymer in der Haftzusammensetzung zwischen 1:2 und 1:25, bevorzugt zwischen 1:4 und 1:20.

Weiterhin hat sich als bevorzugt erwiesen, wenn die Haftzusammensetzung ferner mindestens ein Klebrigmacher-Harz (tackifier resin) enthält, insbesondere auf Basis von Kohlenwasserstoffharzen, bevorzugt von aliphatischen Kohlenwasserstoffharzen, insbesondere wie sie z.B. von der Firma Exxon Mobil unter dem Handelsnamen Escorez™ vertrieben werden.

In einer optionalen und bevorzugten Ausführungsform umfasst die Haftzusammensetzung ferner ein chemisches oder physikalisches Treibmittel.

Es kann sich hierbei um exotherme Treibmittel handeln, wie z.B. Azoverbindungen, Hydrazinderivate, Semicarbazide oder Tetrazole. Bevorzugte Treibmittel sind Azodicarbonamid und Oxy-bis(benzenesulfonyl-hydrazid). Diese Treibmittel setzen bei der Zersetzung Energie frei. Bevorzugt sind ferner sind auch endotherme Treibmittel, wie z.B. Natriumbicarbonat oder Natriumbicarbonat/ Zitronensäure-Mischungen. Derartige chemische Treibmittel sind z.B. unter dem Namen Celogen™ der Firma Chemtura erhältlich. Ebenfalls geeignet sind physikalische Treibmittel, wie sie unter dem Handelsnamen Expancel™ der Firma Akzo Nobel vertrieben werden.

Besonders geeignete Treibmittel sind solche, wie sie unter dem Handelsnamen Expancel™ der Firma Akzo Nobel oder Celogen™ der Firma Chemtura erhältlich sind.

Bevorzugte Treibmittel sind chemische Treibmittel, welche beim Erhitzen, insbesondere auf eine Temperatur von 100 bis 160 °C, ein Gas freisetzen.

Die Menge des physikalischen oder chemischen Treibmittels liegt insbesondere im Bereich von 0 bis 3 Gew.-%, bevorzugt im Bereich von 0,2 bis 2 Gew.-% und besonders bevorzugt im Bereich von 0,5 bis 1,5 Gew.-%, bezogen auf das Gewicht der Haftzusammensetzung.

Die Haftzusammensetzung kann gegebenenfalls mindestens einen Härter für Epoxidharze enthalten. Die Härter für Epoxidharze sind z.B. ausgewählt aus Dicyandiamid, Guanaminen, Guanidinen, Aminoguanidinen und deren Derivaten; substituierten Harnstoffen, insbesondere 3-(3-Chlor-4-methylphenyl)-1,1-dimethylharnstoff (Chlortoluron), oder Phenyl-dimethylharnstoffen, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron), N,N-Dimethylharnstoff, N-iso-Butyl-N',N'-dimethylharnstoff, 1,1'-(Hexan-1,6-diyl)bis(3,3'-dimethylharnstoff) sowie Imidazolen, Imidazol-Salzen, Imidazolinen und Amin-Komplexen. Diese wärmeaktivierbaren Härter sind vorzugsweise bei einer Temperatur von 80 bis 160 °C, insbesondere von 85 °C bis 150 °C, bevorzugt von 90 bis 140 °C, aktivierbar.

Die Haftzusammensetzung kann gegebenenfalls zusätzlich weitere Bestandteile enthalten, z.B. Biozide, Stabilisatoren, insbesondere Wärmestabilisatoren, Weichmacher, Pigmente, Haftvermittler, insbesondere Organosilane, reaktive Bindemittel, Lösungsmittel, Rheologiemodifikatoren, Füllstoffe oder Fasern, insbesondere Glas-, Kohlenstoff-, Zellulose-, Baumwoll- oder synthetische Kunststofffasern, bevorzugt Fasern aus Polyester oder aus einem Homo- oder Copolymeren von Ethylen und/oder Propylen oder aus Viskose.

Die Haftzusammensetzung wird erfindungsgemäß in Form von Pellets auf den Untergrund aufgebracht. Pellets aus einer Haftzusammensetzung sind dem Fachmann bekannt. Sie können z.B. durch herkömmliche Granulierungsverfahren erhalten werden. Die Pellets können z.B. kugel- oder zylinderförmig vorliegen. Die Pellets weisen einen Durchmesser im Bereich von 1 bis 3 mm auf.

Die Pellets können z.B. durch manuelles oder maschinelles Aufstreuen der Pellets auf die nicht klebrige Oberfläche des Untergrunds aufgebracht werden. Besonders bevorzugt ist ein maschinelles Aufstreuen, insbesondere mittels einer Streuvorrichtung. Bei der maschinellen Einstreuung ist eine sehr genaue Dosierung der Pellets möglich. Es können übliche Streuvorrichtungen eingesetzt werden. Die Breite der Streuvorrichtung kann an die Breite des Untergrunds angepasst werden, die mit den Pellets einzustreuen ist.

In einer bevorzugten Ausführungsform ist die Streuvorrichtung in die Asphaltiermaschine zur späteren Aufbringung der Tragschicht auf Bitumenbasis integriert. Auf diese Weise können die Applikation der Pellets und die Applikation der Tragschicht in einem Arbeitsgang durchgeführt werden, was die Arbeiten noch weiter beschleunigt.

Die Auftragsmenge der Pellets auf die Oberfläche des Untergrunds kann je nach Anwendungsfall in breiten Bereichen variieren, liegt aber im Bereich von 50 bis 300 g/m².

Im Schritt (ii) schliesslich wird eine Tragschicht auf Bitumenbasis aufgebracht. Es ist bevorzugt, dass die Tragschicht auf Bitumenbasis direkt auf die Pellets aufgebracht wird, vorzugsweise unmittelbar nach Aufbringen der Pellets aus der Haftzusammensetzung auf den Untergrund. Wartezeiten können so vermieden werden. Die Tragschicht auf Bitumenbasis wird im Allgemeinen auch als Asphaltschicht bzw. Asphaltbelag bezeichnet.

Die Tragschicht auf Bitumenbasis stellt die Fahrbahn dar, welche in direktem Kontakt mit Fahrzeugen ist. Als Tragschicht auf Bitumenbasis kann bevorzugt Gussasphalt oder Walzasphalt dienen. Wenn die Tragschicht auf Bitumenbasis bzw. die bituminöse Tragschicht aus Walzasphalt ist, wird diese z.B. vor der Applikation auf eine Temperatur von typischerweise 140 °C bis 160 °C aufgeheizt und vorzugsweise mittels Walze aufgewalzt.

Das Aufbringen der bituminösen Tragschicht ist dem Fachmann bestens bekannt und wird deshalb hier nicht weiter erörtert.

Als Asphalttypen eignen sich insbesondere Asphalttypen mit einer Mischguttemperatur im Bereich von 100 bis 240 °C. Die vorzugsweise einzusetzenden Asphalttypen in der vorliegenden Erfindung sind Heißmischasphalt (hot mix asphalt, MHA), Warmmischasphalt (warm mix asphalt, WMA), Halbwarmmischasphalt (half warm mix asphalt) und Kaltasphalt (cold mix asphalt).

Neben Bitumen kann die Tragschicht die dem Fachmann bekannten weiteren möglichen Bestandteile aufweisen. Der Fachmann kennt die Art und Menge der Bestandteile von Bitumen basierenden Zusammensetzungen, welche für die Erstellung von Fahrbahnen verwendet werden. Besonders wichtig hierbei ist die Tatsache, dass die Tragschicht üblicherweise in wesentlichem Umfang mineralische Füllstoffe, insbesondere Sand oder Splitt, aufweist.

Bei dem Aufbringen einer Tragschicht auf Bitumenbasis werden die Pellets angeschmolzen und so eine ausreichende Haftung zwischen beiden gewährleistet.

Bei der Applikation des aufgeschmolzenen Bitumens werden die Pellets aus der Haftzusammensetzung durch die Temperatur des Bitumens teilweise oder ganz geschmolzen und bilden dabei zum Asphalt und zum Untergrund eine ausgezeichnete Haftung. Ein sonst üblicher Haftvermittler wie z.B. ein Primer bzw. eine Grundierung, in die die Haftzusammensetzung eingebettet wird, ist nicht erforderlich.

Falls die Pellets aus der Haftzusammensetzung wie bevorzugt ein chemisches oder physikalisches Treibmittel aufweisen, wird beim Kontakt des aufgeschmolzenen Bitumens mit den Pellets das Treibmittel aktiviert, so dass die Haftzusammensetzung leicht aufschäumt, wodurch eine zusätzliche Haftverbesserung resultiert.

Bei Aufschmelzen können die Pellets eine weitgehend homogene Thermoplast-Schicht ausbilden oder sich im Bitumen oberflächennah lösen und eine Thermoplast-enthaltende Grenzphasenschicht ausbilden. Es ist daher bei dem erfindungsgemäßen Verfahren auch möglich, dass die Pellets aus der Haftzusammensetzung keine diskrete oder individuelle Schicht ausbilden.

Es ist bevorzugt, dass die Tragschicht auf Bitumenbasis innerhalb eines Zeitraums von weniger als 24 Stunden, bevorzugt weniger als 1 Stunde, nach Aufbringen der Pellets auf die mit den Pellets versehene Oberfläche des Untergrunds aufgebracht wird.

Die Pellets bilden erfindungsgemäß vorzugsweise einen Haftverbund zwischen einem Untergrund, der eine nicht klebrige Oberfläche aus Beton, Asphalt, Flüssigkunststofffolie oder Bitumenmembran aufweist, und der Tragschicht auf Bitumenbasis bzw. einer Asphaltschicht.

In einer bevorzugten Ausführungsform wird mit dem erfindungsgemäßen Verfahren ein Fahrbahnaufbau, insbesondere ein Fahrbahnaufbau mit einem Asphaltbelag, saniert bzw. instandgesetzt.

Dabei ist es bevorzugt, dass der instandzusetzende Fahrbahnaufbau, der gegebenenfalls vorbehandelt wurde, als Untergrund für die Aufbringung der Pellets dient, oder ein oberer Teil des instandzusetzenden Fahrbahnaufbaus entfernt wird, um einen Untergrund zu bilden, auf den die Pellets aufgebracht werden.

Die Sanierung eines Asphaltbelags kann daher so erfolgen, dass direkt auf den zu sanierenden Asphaltbelag die Pellets aufgebracht werden und unmittelbar danach die neue Tragschicht auf Bitumenbasis aufgebracht wird. Bei einem alternativen Verfahren werden Teile des zu sanierenden Fahrbahnbelags, z.B. der zu sanierende Asphaltbelag, entfernt und auf den verbleibenden Untergrund mit Tragstruktur werden die Pellets und unmittelbar danach die neue Tragschicht auf Bitumenbasis aufgebracht. In beiden Fällen ist ein vorheriges Aufbringen einer Primerschicht nicht erforderlich.

Ein mit dem erfindungsgemäßen Verfahren hergestellter I Fahrbahnaufbau zeigt einen dauerhaften Verbund unter den einzelnen Schichten, der auch unter grossen Achslasten langzeitig formstabil ist. Die Verwendung der Pellets vermeidet die sonst erforderliche Vorbehandlung von Oberflächen, z.B. die Behandlung mit einem Primer, und liefert eine verbesserte Haftung.

Das erfindungsgemäße Verfahren eignet sich insbesondere zur Instandsetzung eines Fahrbahnaufbaus, insbesondere eines Fahrbahnaufbaus mit einem Asphaltbelag, wobei der Fahrbahnaufbau bevorzugt eine Straße oder eine Brücke ist. Das Verfahren ist besonders geeignet, wenn unter Zeitdruck gearbeitet werden muss.

### Kurze Beschreibung der Zeichnung

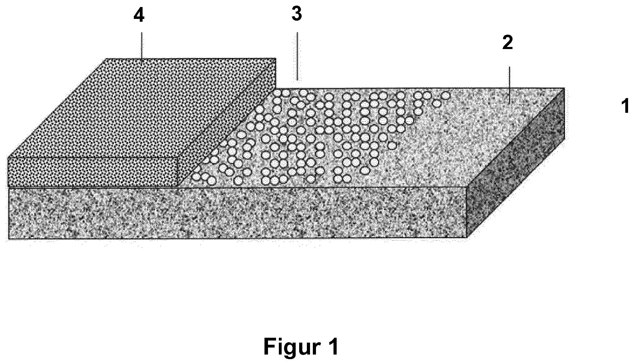

Fig. 1 zeigt schematisch die Schichtabfolge für das erfindungsgemäße Verfahren zur Herstellung eines Fahrbahnaufbaus. Es sind nur die für das unmittelbare Verständnis der Erfindung wesentlichen Elemente gezeigt.

Fig. 1 zeigt einen Fahrbahnaufbau 1, bei der auf eine nicht klebrige Oberfläche eines Untergrundes 2, Pellets aus der Haftzusammensetzung 3 aufgebracht worden sind und darüber eine Tragschicht auf Bitumenbasis 4 appliziert worden ist. Die nicht klebrige Oberfläche des Untergrundes 2 ist bevorzugt aus Beton oder Asphalt. Die Oberfläche des Untergrunds ist z.B. durch eine Betontragstruktur oder einen Asphaltbelag gebildet.

### Bezugszeichenliste

- 1: Fahrbahnaufbau
- 2: Untergrund umfassend Tragstruktur, vorzugsweise Betontragstruktur
- 3: Pellets aus Haftzusammensetzung
- 4: Tragschicht auf Bitumenbasis

### Beispiel

Es wurde eine Haftzusammensetzung mit den in Tabelle 1 genannten Bestandteilen in den dort angegebenen Mengenanteilen hergestellt.

**Tabelle 1**

| | | Gew.-Teile |
|---|---|---|
| EVA | Ethylen/Vinylacetat-Copolymer (Vinylacetatgehalt 28 Gew.-%, Erweichungstemperatur (Ring & Kugel-Methode gemäss DIN ISO 4625): 106 °C | 25,0 |
| MAM-EVA | Maleinsäureanhydrid-gegepfropftes Ethylen/Vinylacetat-Copolymer (Maleinsäureanhydrid-Anteil: 0,2- 0,4 Gew.-%) | 23,4 |
| Araldite® | Epoxid-Festharz | 4,0 |
| Kohlenwasserstoffharz | Klebrigmacher-Harz | 10,0 |
| Kreide | Füllstoff | 36,8 |
| Natriumbicarbonat | Treibmittel | 0,8 |

Zur Herstellung der Haftzusammensetzung wurden die Bestandteile in einem Doppelschneckenextruder bei einer Temperatur von 80-120 °C miteinander vermischt. Durch anschliessende Granulierung wurden Pellets mit einem Durchmesser von etwa 1 bis 3 mm gebildet. Die erhaltenen Pellets wurden wie folgt getestet.

Von einem Walzasphalt (ca. 10 cm dick) wurde eine Schicht von ca. 5 cm abgefräst.

Danach wurde auf einem Muster herkömmliche Bitumenemulsion (0,3 kg/m²) appliziert. Auf einem zweiten Muster wurden Pellets der Haftzusammensetzung von Tabelle 1 (0,2 kg/m²) appliziert.

Anschliessend wurde jeweils auf beiden Mustern eine Schicht Walzasphalt (5 cm, 160 °C) appliziert.
Der Schichtenverbund wird gemäss ZTV Asphalt-StB 07 bestimmt (Norm: > 15 kN).

Der Einsatz von 0,3 kg/m² Bitumenemulsion entsprechend dem Stand der Technik führt zu einem Haftzugwert von 30 kN hinsichtlich der verwendeten Schichtkombination Asphalt/ Asphalt.

Bei Einsatz von 0,2 kg/m² Pellets der Haftzusammensetzung von Tabelle 1 führt im erfindungsgemäßen Fall zu einem Messwert von > 50 kN bei der Schichtkombination Asphalt/ Asphalt. Die Menge der eingesetzten Haftzusammensetzung kann folglich noch herabgesetzt werden, um den gleichen Haftzugwert, der durch den Stand der Technik mit Bitumenemulsion erzielt wird, zu erreichen. Dies hat eine deutliche Kostenreduktion zur Folge.

## Patentansprüche

1. Verfahren zur Herstellung eines Fahrbahnaufbaus umfassend die Schritte
(i) Aufbringen von Pellets aus einer Haftzusammensetzung auf eine nicht klebrige Oberfläche eines Untergrunds umfassend eine Tragstruktur, vorzugsweise eine Betonstruktur oder Asphaltstruktur, wobei die Haftzusammensetzung mindestens ein Epoxid-Festharz und mindestens ein bei Raumtemperatur festes thermoplastisches Polymer enthält; und
(ii) Aufbringen einer Tragschicht auf Bitumenbasis, **dadurch gekennzeichnet, dass** die nicht klebrige Oberfläche des Untergrunds aus Beton, Asphalt, oder einer Bitumenmembran gebildet ist, wobei die Pellets einen Durchmesser in einem Bereich von 1 bis 3 mm aufweisen und wobei die Auftragsmenge der Pellets im Bereich von 50 bis 300 g/m² liegt.

2. Verfahren nach Anspruch 1, **dadurch gekennzeichnet, dass** die Tragschicht auf Bitumenbasis innerhalb eines Zeitraums von weniger als 1 Stunde, bevorzugt weniger als 15 Minuten, nach Aufbringen der Pellets auf die mit den Pellets versehene Oberfläche des Untergrunds aufgebracht wird.

3. Verfahren nach Anspruch 1 oder 2, **dadurch gekennzeichnet, dass** die Pellets durch manuelles oder maschinelles Aufstreuen der Pellets auf die Oberfläche des Untergrunds aufgebracht werden, bevorzugt mittels einer Streuvorrichtung.

4. Verfahren nach irgendeinem der vorhergehenden Ansprüche, **dadurch gekennzeichnet, dass** die Oberflächenschicht des Untergrunds keine Primerschicht ist.

5. Verfahren nach irgendeinem der vorhergehenden Ansprüche, **dadurch gekennzeichnet, dass** mit dem Verfahren ein Fahrbahnaufbau, insbesondere ein Fahrbahnaufbau mit einem Asphaltbelag, instandgesetzt wird.

6. Verfahren nach Anspruch 5, wobei der instandzusetzende Fahrbahnaufbau, der gegebenenfalls vorbehandelt wurde, als Untergrund für die Aufbringung der Pellets dient oder ein oberer Teil des instandzusetzenden Fahrbahnaufbaus entfernt wird, um einen Untergrund zu bilden, auf den die Pellets aufgebracht werden.

7. Verfahren nach irgendeinem der vorhergehenden Ansprüche, **dadurch gekennzeichnet, dass** die Tragschicht auf Bitumenbasis direkt auf die auf den Untergrund aufgebrachten Pellets aufgebracht wird.

8. Verfahren nach irgendeinem der vorhergehenden Ansprüche, **dadurch gekennzeichnet, dass** die Haftzusammensetzung ferner ein chemisches oder physikalisches Treibmittel enthält, bevorzugt in einer Menge von 0,1 bis 3 Gew.-%, bezogen auf das Gewicht der Haftzusammensetzung.

9. Verfahren nach irgendeinem der vorhergehenden Ansprüche, **dadurch gekennzeichnet, dass** das mindestens eine bei Raumtemperatur feste thermoplastische Polymer ein Ethylen/Vinylacetat-Copolymer oder ein Terpolymer aus Ethylen, Acrylester und Maleinsäureanhydrid umfasst.

## Claims

1. Method for producing a roadway structure, comprising the steps
(i) applying pellets of an adhesive composition to a non-tacky surface of a substrate comprising a support structure, preferably a concrete structure or asphalt structure, wherein the adhesive composition comprises at least one solid epoxy resin and at least one thermoplastic polymer that is solid at room temperature; and
(ii) applying a bitumen-based bearing course, **characterized in that** the non-tacky surface of the substrate is formed of concrete, asphalt, or a bitumen membrane, wherein the pellets have a diameter in a range from 1 to 3 mm and wherein the amount of pellets applied is in the range from 50 to 300 g/m².

2. Method according to Claim 1, **characterized in that** the bitumen-based bearing course is applied to the surface of the substrate provided with the pellets within a period of less than 1 hour, preferably less than 15 minutes, after application of the pellets.

3. Method according to Claim 1 or 2, **characterized in that** the pellets are applied by manually or mechanically scattering the pellets onto the surface of the substrate, preferably by means of a scattering device.

4. Method according to any of the preceding claims, **characterized in that** the surface course of the substrate is not a primer course.

5. Method according to any of the preceding claims, **characterized in that** a roadway structure, in particular a roadway structure having an asphalt covering, is repaired by the method.

6. Method according to Claim 5, wherein the roadway structure to be repaired, which has optionally been pretreated, serves as the substrate for application of the pellets, or an upper portion of the roadway structure to be repaired is removed to form a substrate to which the pellets are applied.

7. Method according to any of the preceding claims, **characterized in that** the bitumen-based bearing course is applied directly to the pellets applied to the substrate.

8. Method according to any of the preceding claims, **characterized in that** the adhesive composition further comprises a chemical or physical blowing agent, preferably in an amount of 0.1 to 3% by weight, based on the weight of the adhesive composition.

9. Method according to any of the preceding claims, **characterized in that** the at least one thermoplastic polymer that is solid at room temperature comprises an ethylene/vinyl acetate copolymer or a terpolymer of ethylene, acrylic ester and maleic anhydride.

## Revendications

1. Procédé de fabrication d'une construction de chaussée comprenant les étapes suivantes :
(i) l'application de granulés d'une composition adhésive sur une surface non collante d'un substrat comprenant une structure porteuse, de préférence une structure en béton ou une structure en asphalte, la composition adhésive contenant au moins une résine solide époxyde et au moins un polymère thermoplastique solide à température ambiante ; et
(ii) l'application d'une couche porteuse à base de bitume, **caractérisé en ce que** la surface non collante du substrat est formée par du béton, de l'asphalte ou une membrane en bitume, les granulés présentant un diamètre dans une plage allant de 1 à 3 mm et la quantité appliquée des granulés se situant dans la plage allant de 50 à 300 g/m².

2. Procédé selon la revendication 1, **caractérisé en ce que** la couche porteuse à base de bitume est appliquée sur la surface du substrat munie des granulés pendant une période de moins de 1 heure, de préférence de moins de 15 minutes, après l'application des granulés.

3. Procédé selon la revendication 1 ou 2, **caractérisé en ce que** les granulés sont appliqués par épandage manuel ou mécanique des granulés sur la surface du substrat, de préférence au moyen d'un dispositif d'épandage.

4. Procédé selon l'une quelconque des revendications précédentes, **caractérisé en ce que** la couche de surface du substrat n'est pas une couche d'apprêt.

5. Procédé selon l'une quelconque des revendications précédentes, **caractérisé en ce qu'**une construction de chaussée, notamment une construction de chaussée munie d'un revêtement d'asphalte, est réparée avec le procédé.

6. Procédé selon la revendication 5, dans lequel la construction de chaussée à réparer, qui a éventuellement été prétraitée, sert de substrat pour l'application des granulés ou une partie supérieure de la construction de chaussée à réparer est éliminée afin de former un substrat sur lequel les granulés sont appliqués.

7. Procédé selon l'une quelconque des revendications précédentes, **caractérisé en ce que** la couche porteuse à base de bitume est appliquée directement sur les granulés appliqués sur le substrat.

8. Procédé selon l'une quelconque des revendications précédentes, **caractérisé en ce que** la composition adhésive contient en outre un agent gonflant chimique ou physique, de préférence en une quantité de 0,1 à 3 % en poids, par rapport au poids de la composition adhésive.

9. Procédé selon l'une quelconque des revendications précédentes, **caractérisé en ce que** ledit au moins un polymère thermoplastique solide à température ambiante comprend un copolymère d'éthylène/acétate de vinyle ou un terpolymère d'éthylène, d'ester acrylique et d'anhydride de l'acide maléique.
